# FASCICULE DE BREVET EUROPEEN

(11) **EP 0 846 920 B1**
(45) Date de publication et mention de la délivrance du brevet: **11.06.2003**
(21) Numéro de dépôt: 97402899.5
(22) Date de dépôt: 02.12.1997
(51) Int. Cl.: F23R 3/20, F23R 3/28, F02K 7/10

(54) **Mât d'injection de combustible pour un statoréacteur refroidi par perspiration**
Transpirationsgekühlte Brennstoffeinspritzstrebe
Transpiration cooled fuel injector bar for a ramjet engine

(30) Priorité: 03.12.1996 FR 9614786
(43) Date de publication de la demande: 10.06.1998
(73) Titulaire: AEROSPATIALE MATRA, 75016 Paris (FR)
(72) Inventeur: Chevalier, Alain, 18000 Asnieres Les Bourges (FR); Bouchez, Marc, 18000 Bourges (FR)
(74) Mandataire: Bonnetat, Christian

(56) Documents cités:
- DE-A- 2 329 346
- FR-A- 1 177 045
- FR-A- 2 636 677
- FR-A- 2 706 588
- US-A- 3 556 443
- US-A- 3 699 773
- US-A- 3 727 409
- US-A- 3 808 833
- US-A- 5 396 761
- US-A- 5 660 040
- PATENT ABSTRACTS OF JAPAN vol. 017, no. 407 (M-1454), 29 juillet 1993 & JP 05 079628 A (NATL AEROSPACE LAB), 30 mars 1993,

## Description

La présente invention concerne un mât d'injection de combustible pour un statoréacteur fonctionnant sur une large plage de nombre de Mach, notamment à un nombre de Mach élevé, par exemple de l'ordre de 12 à 15.

On sait que, pour la propulsion d'aéronefs hypersoniques (missiles, engins, avions, etc ...), les statoréacteurs sont particulièrement avantageux, car ils permettent de fonctionner dans une large plage de nombre de Mach, par exemple de 2 à 15, et ils présentent une faible consommation spécifique de combustible. En fonction de l'application particulière à un aéronef, et éventuellement de la phase de vol de ce dernier, le combustible utilisé peut être un hydrocarbure liquide, tel que le kérosène par exemple, ou un gaz, tel que l'hydrogène ou le méthane par exemple.

On sait de plus qu'un statoréacteur comporte, d'une part, au moins une entrée de comburant, constituée le plus généralement par une manche à air ou une prise d'air, dirigeant une veine de comburant (notamment de l'air) vers une chambre de combustion et, d'autre part, au moins un dispositif d'injection permettant d'injecter le combustible dans ladite veine de comburant, de façon à obtenir un flux de mélange comburant-combustible qui est allumé dans ladite chambre de combustion.

Dans les statoréacteurs prévus pour des fonctionnements à un nombre de Mach peu élevé (par exemple jusqu'à Mach 2), un tel dispositif d'injection de combustible peut être constitué par un ensemble d'injecteurs élémentaires, disposés sur la paroi interne du statoréacteur, à la périphérie de la veine de comburant.

Cependant, pour des fonctionnements à des nombres de Mach élevés, quand la combustion dans le statoréacteur se fait dans une veine supersonique ou hypersonique, l'injection de combustible ne peut plus être faite uniquement à la paroi interne du statoréacteur. En effet, dans ce cas, la pénétration des jets de combustible dans la veine de comburant est trop faible pour que l'on puisse obtenir un bon mélange du comburant et du combustible à l'intérieur de ladite veine, de sorte que la combustion est mauvaise, ou même impossible. Bien entendu, un tel inconvénient est d'autant plus important que les dimensions transversales de la veine de comburant sont plus grandes.

Aussi, pour y remédier, a-t-on déjà prévu des dispositifs d'injection en forme de rampes, pourvus d'une pluralité d'injecteurs élémentaires répartis sur leur longueur, que l'on dispose dans ladite veine de comburant, transversalement à celle-ci, en solidarisant les extrémités desdites rampes à des parois opposées dudit statoréacteur, comme décrit dans le document US 3 727 409 A. Un tel dispositif d'injection est généralement désigné par le terme "mât d'injection" et il est utilisé soit isolément, soit en combinaison avec une injection de combustible en paroi.

Grâce aux mâts d'injection, on peut ainsi obtenir un mélange comburant-combustible satisfaisant à travers toute la section de la veine de comburant. Plus généralement, les mâts d'injection implantés dans un statoréacteur hypersonique permettent :
- d'assurer une alimentation de combustible dans toute la veine de comburant, malgré la faible pénétration des jets de combustible dans une veine de comburant à vitesse hypersonique ;
- d'augmenter la proportion de combustible dans le mélange comburant-combustible ;
- d'aider à l'allumage du mélange comburant-combustible et à stabiliser la flamme ;
- de participer à la compression de la veine de comburant, en ralentissant l'écoulement de comburant capté par le statoréacteur.

De tels mâts d'injection, qui sont soumis à l'action de la veine de comburant, se comportent donc chacun, du point de vue aérodynamique, comme une aile encastrée à ses extrémités dans deux parois opposées du statoréacteur. De plus, du côté de leur étrave, opposée aux injecteurs de combustible disposés au culot du mât, qui reçoit la veine de comburant, lesdits mâts d'injection doivent présenter un bord d'attaque de faible rayon pour réduire les pertes de pression, qui limiteraient les performances propulsives du statoréacteur et pourraient même conduire à un blocage de la veine de comburant, qui ne peut rester hypersonique dans la chambre de combustion que si la vitesse du comburant en amont est suffisamment élevée.

Cependant, l'échauffement de ladite étrave, engendré par la veine de comburant hypersonique, est sensiblement inversement proportionnel à la racine carrée du rayon du bord d'attaque de ladite étrave. Par suite, une étrave de faible rayon de bord d'attaque est soumise à des échauffements très importants. On remarquera de plus que, lesdits mâts d'injection étant disposés à l'intérieur du statoréacteur, il est impossible d'en assurer le refroidissement par rayonnement avec l'air dans lequel vole l'aéronef propulsé par ledit statoréacteur. Une telle étrave est donc soumise à des températures très élevées, de l'ordre de 5000K par un aéronef volant à Mach 12 à une altitude de l'ordre de 30 km. Il est donc nécessaire de construire les mâts d'injection dans des matières telles que des céramiques, le rayon dudit bord d'attaque étant de l'ordre de 3 à 5 mm. Cependant, compte-tenu des procédés actuels de réalisation de pièces en céramique, on conçoit aisément que la fabrication de mâts d'injection en matière céramique, devant satisfaire à une grande précision, est obligatoirement longue et coûteuse.

La présente invention a pour objet de remédier à ces inconvénients. Elle concerne un mât d'injection pour statoréacteur hypersonique, qui, à la fois, présente un bord d'attaque de faible rayon et peut être réalisé en des matières autres que des céramiques.

A cet effet, le mât d'injection de combustible pour un statoréacteur destiné à fonctionner à un nombre de Mach élevé et comportant une chambre de combustion dans laquelle est introduite une veine de comburant, ledit mât comportant une étrave ayant un bord d'attaque recevant ladite veine de comburant et formant, au culot dudit mât, une rampe d'injecteurs élémentaires de combustible, disposée dans ladite veine de comburant transversalement à celle-ci et répartissant ledit combustible dans ladite veine de comburant, est remarquable, selon l'invention, en ce que :
- ladite étrave est formée, au moins au voisinage de son bord d'attaque, par une paroi perméable, et
- ledit mât comporte :
   . une chambre prévue dans la concavité de ladite paroi perméable de l'étrave, et
   . des moyens d'injection d'un fluide de refroidissement dans ladite chambre, lesdits moyens d'injection étant aptes à engendrer une pluralité de jets de fluide de refroidissement répartis le long de la hauteur de ladite étrave et frappant la face concave de ladite paroi perméable, au moins dans la région dudit bord d'attaque, de façon à traverser ladite paroi perméable.

Ainsi, on obtient un refroidissement du bord d'attaque du mât en injectant, à travers celui-ci, un fluide de refroidissement aux plus hautes vitesses. Par ailleurs, une telle perméabilité du bord d'attaque permet également, comme on le verra plus en détail par la suite, de faciliter l'allumage aux plus basses vitesses en admettant de l'air aux plus basses vitesses, en exploitant ainsi la perméabilité "à double sens" du bord d'attaque.

A titre d'exemples, ladite paroi de l'étrave peut être réalisée, au moins au voisinage du bord d'attaque de cette dernière, en un matériau perméable aux jets de fluide de refroidissement, ou elle peut présenter au moins une série de perforations s'étendant le long du bord d'attaque de l'étrave, ou encore au moins une fente s'étendant le long du bord d'attaque de l'étrave.

Avantageusement, le fluide de refroidissement est constitué par du combustible.

Selon une autre particularité de l'invention, ladite étrave est constituée d'une pièce sensiblement en forme de dièdre dont l'arête forme le bord d'attaque de l'étrave, et définissant, dans sa concavité, une chambre.

De plus, le mât comporte avantageusement un corps définissant, à l'intérieur du mât d'injection, une cavité interne dans laquelle sont agencées une pluralité de chambres élémentaires réalisées, chacune, sous forme d'un cylindre perforé ouvert aux deux extrémités.

En particulier, lesdites chambres élémentaires sont disposées l'une au-dessus de l'autre, et à un certain écartement l'une de l'autre, dans ladite cavité en une rangée.

De préférence, une première extrémité de chacune desdites chambres débouche dans la concavité de ladite étrave, tandis que chaque autre extrémité desdites chambres, au culot du mât d'injection, est réalisée sous forme d'injecteur principal de combustible.

Selon une autre caractéristique de l'invention, une pièce en forme de capot, munie d'orifices correspondants, recouvre l'ensemble des premières extrémités desdites chambres.

Avantageusement, au culot du mât, il est prévu, dans chaque intervalle entre deux chambres élémentaires, un injecteur secondaire de combustible.

Par ailleurs, l'alimentation en combustible dudit mât peut être assurée par des canaux d'alimentation prévus dans les extrémités du mât encastrées dans les parois opposées de la chambre d'injection du statoréacteur.

De plus, le mât peut comprendre des capteurs de mesure de la pression au bord d'attaque, de celle à l'intérieur du mât et de la pression d'alimentation en combustible, ainsi qu'un capteur de mesure de la température de la paroi du bord d'attaque.

Les figures du dessin annexé feront bien comprendre comment l'invention peut être réalisée. Sur ces figures, des références identiques désignent des éléments semblables.

La figure 1 est une vue très schématique en perspective d'un exemple de réalisation de statoréacteur pourvu de mâts d'injection de combustible, l'enveloppe dudit statoréacteur étant supposée transparente.

La figure 2 est une vue en perspective éclatée d'un exemple de réalisation du mât d'injection de combustible conforme à la présente invention.

La figure 3 est une coupe longitudinale médiane du mât de la figure 2.

Les figures 4, 5, 6, 7 et 8 sont des coupes transversales dudit mât d'injection de combustible, correspondant respectivement aux lignes de coupe IV-IV, V-V, VI-VI, VII-VII et VIII-VIII de la figure 3.

La figure 9 est une demi-coupe transversale schématique d'une partie d'un mât d'injection selon l'invention dans l'écoulement de combustible et de comburant.

La figure 10 est une demi-coupe transversale schématique de la partie du mât d'injection de la figure 9 dans les parois du moteur, présentant des alimentations latérales en combustible.

Les figures 11 et 12, analogues à la figure 9, illustrent deux modes de fonctionnement du mât d'injection selon l'invention.

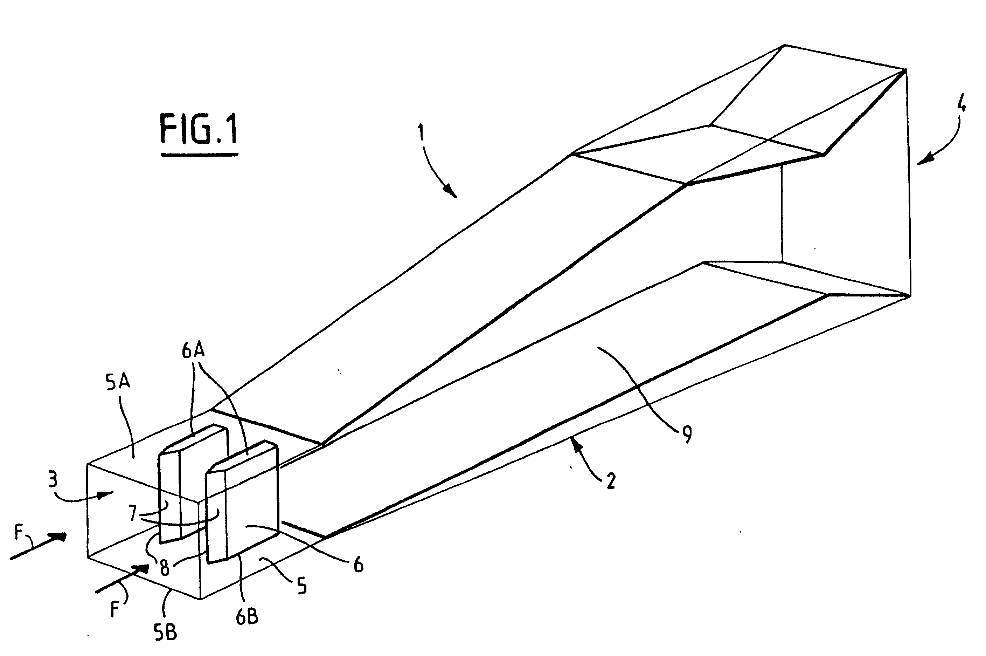

Le statoréacteur 1, montré sur la figure 1, est destiné à la propulsion d'un aéronef hypersonique (non représenté) devant voler dans une large plage de nombre de Mach, par exemple d'environ Mach 3 à un nombre de Mach de l'ordre de 12 à 15.

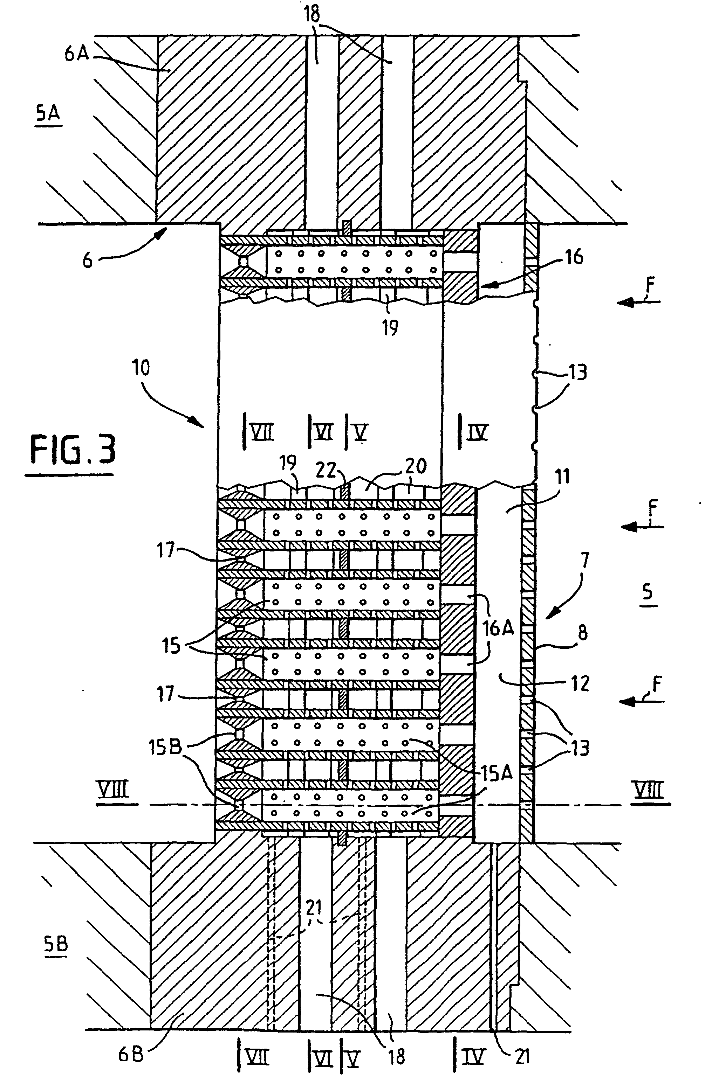

Le statoréacteur 1 comporte une enveloppe 2 pourvue, à l'une de ses extrémités, d'une prise d'air 3 pour une veine d'air devant servir de comburant (symbolisée par des flèches F) et, à son extrémité opposée, d'une tuyère 4. En aval de la prise d'air 3, l'enveloppe 2 forme une chambre d'injection 5, à l'intérieur de laquelle sont disposés deux mâts d'injection de combustible 6, transversalement à la veine de comburant F. Les mâts d'injection 6 comportent, chacun, une étrave 7 ayant un bord d'attaque 8, recevant ladite veine de comburant et sont solidarisés à l'enveloppe 2, par leurs extrémités 6A et 6B fixées à la face interne de deux parois opposées 5A et 5B de la chambre d'injection 5. Entre la chambre d'injection 5 et la tuyère 4, l'enveloppe 2 délimite une chambre de combustion 9, à la partie amont de laquelle sont prévus des allumeurs (non représentés). A leur partie arrière ou culot (c'est-à-dire en regard de la chambre de combustion 9), lesdits mâts d'injection 6 comportent des rampes d'injection longitudinales (non visibles sur la figure 1, mais représentées sur la figure 3 notamment).

Ainsi, le combustible est réparti dans toute la veine de comburant F, au niveau des mâts d'injection 6, et la combustion du flux du mélange comburant-combustible se produit dans la chambre de combustion 9, après quoi les gaz de combustion sont éjectés à travers la tuyère 4. On notera que, comme combustible, on peut utiliser du kérosène pour les nombres de Mach de vol les plus faibles (jusqu'à Mach 8) (éventuellement avec un barbotage d'hydrogène de façon à faciliter l'allumage du statoréacteur et l'éclatement du jet), puis de l'hydrogène pour les nombres de Mach plus élevés. D'autres combustibles, tels que du méthane, des hydrocarbures endothermiques, des combustibles de synthèse, peuvent être également employés pour un statoréacteur de ce type.

Dans l'exemple de réalisation particulier représenté sur la figure 1, l'enveloppe 2 du statoréacteur présente, dans son ensemble, une forme de conduite de section transversale rectangulaire ou carrée, constituée généralement de quatre parois deux à deux opposées (supposées transparentes sur cette figure 1). Il est bien entendu qu'une telle configuration n'est nullement limitative.

Comme cela a été mentionné ci-dessus, le bord d'attaque 8 de l'étrave 7 des mâts d'injection 6 subit de très importants flux thermiques, lorsque la veine de comburant correspond à un vol hypersonique. Ainsi, à Mach 12, le bord d'attaque de l'étrave peut être porté à une température de l'ordre de 5000K.

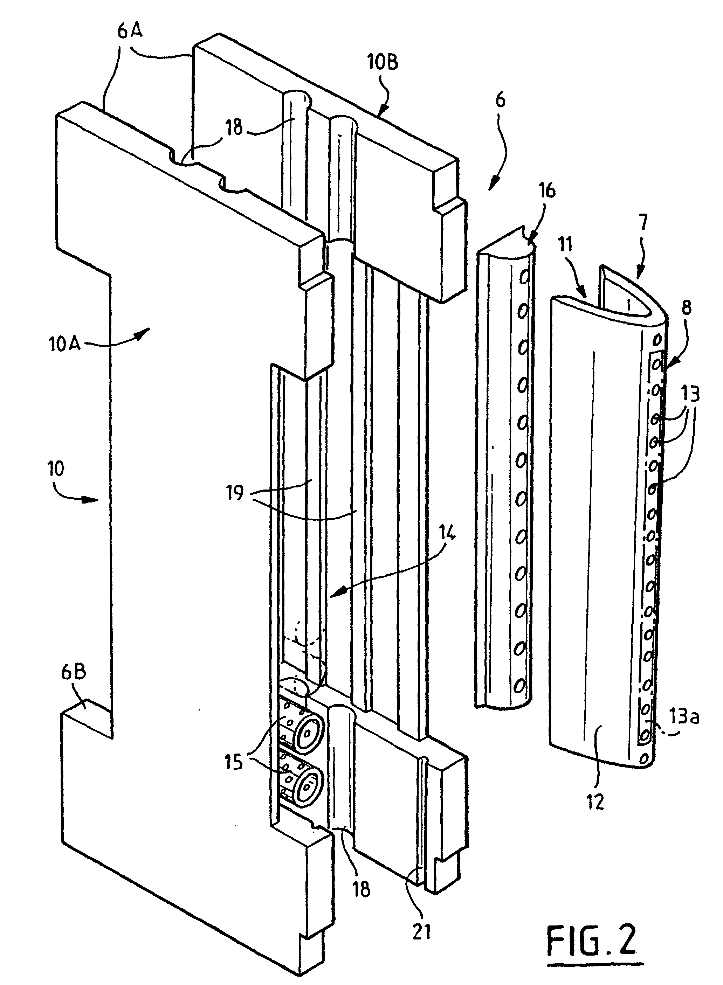

Les figures 2 à 8 illustrent un mode de réalisation pour un mât d'injection 6, conforme à l'invention et susceptible de résister à des contraintes thermiques aussi élevées.

Comme le montrent ces figures, dans ce mode de réalisation, le mât d'injection de combustible 6 comporte un corps 10, notamment métallique, pouvant être formé, comme l'illustre la figure 2, de deux demi-corps assemblés 10A, 10B, et ladite étrave 7, constituée d'une pièce, par exemple métallique, sensiblement en forme de dièdre dont l'arête forme le bord d'attaque 8 de l'étrave 7, et définissant, dans sa concavité, une chambre 11. Comme déjà indiqué, l'étrave 7 est formée, au moins au voisinage de son bord d'attaque 8, par une paroi 12 perméable à des jets de fluide de refroidissement.

Cette dernière peut être réalisée, au moins au voisinage du bord d'attaque 8 de l'étrave 7, en un matériau perméable aux jets de fluide de refroidissement, c'est-à-dire que, dans ce cas, la perméabilité de la paroi est assurée par la porosité naturelle du matériau employé. Cependant, comme illustré sur les figures, la paroi 12 de l'étrave 7 peut présenter également une série de perforations 13, ou une fente 13a (en traits mixtes sur la figure 2), s'étendant le long du bord d'attaque 8 de l'étrave 7. On notera que tout autre dispositif permettant d'assurer la perméabilité voulue tout en conservant une tenue mécanique suffisante peut être également envisagé.

A titre d'exemple, sachant que tout dimensionnement dépend bien sûr de l'application et du cas particuliers, les dimensions typiques, au niveau de l'étrave, peuvent être une épaisseur de l'ordre de 30 mm, un rayon de bord d'attaque millimétrique, un angle de 6° pour l'étrave, une longueur de quelques dizaines de centimètres, et une envergure pouvant atteindre 1 m. A cet égard, le dessin, notamment la figure 2, ne doit pas être considéré comme précisément illustratif de ce dimensionnement, mais il a été plutôt élaboré dans un souci de clarté de la représentation.

Considérant qu'un fluide de refroidissement avantageux est constitué par le combustible lui-même dont une petite partie peut être injectée à travers le bord d'attaque pour refroidir ce dernier aux plus hauts Mach de vol (à partir de Mach 6 par exemple), on décrira ci-après en détail la structure interne du corps 10 du mât d'injection 6 selon l'exemple de réalisation de l'invention illustré par les figures 2 à 8.

Comme on le voit notamment sur la figure 2, les deux demi-corps 10A, 10B définissent, à l'intérieur du mât d'injection 6, une cavité interne 14 dans laquelle sont agencées une pluralité de chambres élémentaires 15 réalisées, chacune, sous forme d'un cylindre perforé ouvert aux deux extrémités. Les chambres 15 sont disposées l'une au-dessus de l'autre, et à un certain écartement l'une de l'autre, dans la cavité 14 en une rangée, et une première extrémité 15A de chacune de celles-ci débouche dans la concavité de l'étrave 7, de préférence par l'intermédiaire d'un orifice correspondant 16A d'une pièce 16, constituant une sorte de capot, recouvrant l'ensemble des extrémités 15A des chambres 15. Chaque autre extrémité 15B des chambres 15, au culot du mât d'injection 6, est réalisée sous forme d'injecteur principal de combustible.

Au culot du mât d'injection 6, il est par ailleurs prévu, dans chaque intervalle entre deux chambres 15, un injecteur secondaire de combustible 17.

L'ensemble est alimenté en combustible par des canaux d'alimentation 18 prévus dans les extrémités 6A, 6B du mât 6 encastrées dans les parois opposées 5A, 5B de la chambre d'injection 5. Le combustible est diffusé dans la cavité 14, à travers les chambres perforées 15, en étant canalisé par des nervures longitudinales 19 définissant des évidements 20 le long de la hauteur de la cavité 14.

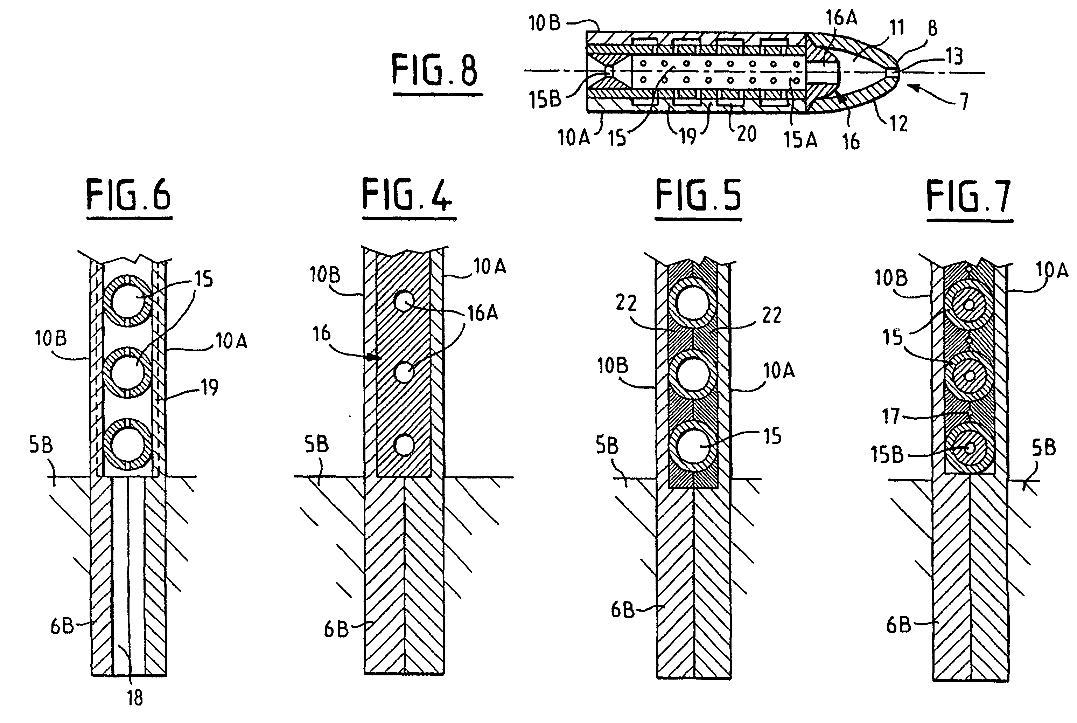

En outre, des prises de pression 21 sont montrées sur les figures 2 et 3, tandis que la référence numérique 22 désigne, sur la figure 3, une plaque de support et de maintien pour les chambres 15 (voir aussi la figure 5).

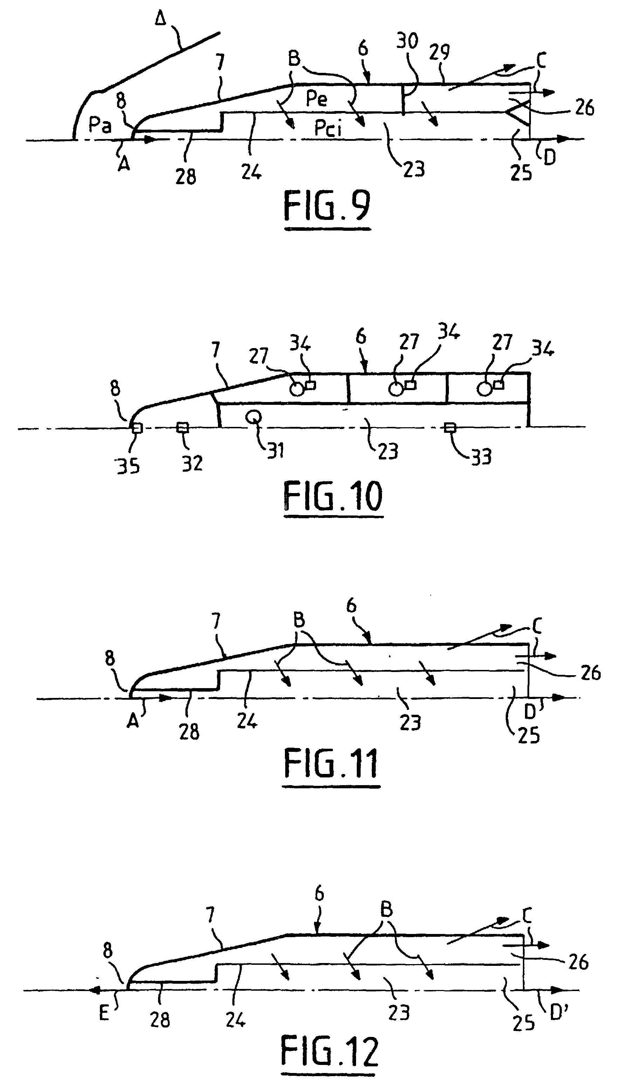

Les figures 9 et 10 illustrent encore l'invention, suivant une forme de réalisation simplifiée du mât d'injection 6, comportant encore une étrave 7 ayant un bord d'attaque perméable 8.

La représentation simplifiée du mât d'injection sur les figures 9 et 10 permet notamment d'expliciter plus clairement les deux modes de fonctionnement autorisés par la structure du mât selon l'invention, en regard des figures 11 et 12 ci-après.

Par ailleurs, sur la figure 9, il est montré, suivant une variante de réalisation par rapport aux figures 2 à 8 mais dont le principe reste le même, une chambre interne 23 à paroi perméable 24. L'injection principale de combustible dans la veine est réalisée par l'intermédiaire des orifices 25, une injection secondaire par les orifices 26, lesquelles injections peuvent être avantageusement soniques ou supersoniques.

Sur la figure 10, on voit des alimentations en combustible 27, équipées d'un dispositif de réglage de pression et de débit (non représenté).

De plus, le canal 28 permet la communication entre le bord d'attaque perméable 8 et la chambre interne 23.

La paroi externe du mât d'injection 6 peut être éventuellement perméable localement (en 29), par exemple pour évacuer, par effet de film, un flux thermique en excès local, lié à l'impact d'un choc.

Des raidisseurs 30 peuvent être nécessaires à la bonne tenue mécanique du mât.

Un dispositif d'allumage 31 (figure 10), constitué par exemple d'une ou plusieurs bougies commandées électriquement, peut être implanté sur la chambre interne.

En outre, des mesures de pression sont utilisées pour gérer l'injection suivant l'effet souhaité. On mesure, par exemple, la pression au bord d'attaque (capteur 32), celle dans la chambre interne (capteur 33) et la pression d'alimentation en combustible (capteur 34). Si on le souhaite, la mesure de la température (par exemple par thermocouple 35) de la paroi du bord d'attaque peut permettre de déclencher le refroidissement de ce dernier.

La gestion du mode de fonctionnement du mât d'injection est effectuée en jouant :
- sur l'alimentation en ergols avec une pression donnée,
- sur l'utilisation ou non du dispositif d'allumage,
- à partir des mesures provenant des capteurs de pression et de température.

Le sens de l'écoulement (admission de comburant, notamment d'air ou injection de fluide refroidisseur, notamment de combustible) à travers le bord d'attaque perméable de l'étrave du mât --en d'autres termes, aspiration en mode "brûleur" ou injection en mode "refroidissement du bord d'attaque" (figures 11 et 12)-- est avantageusement commandé par la différence de pression entre l'extérieur (air incident) et l'intérieur du mât, sans utiliser aucun organe mécanique mobile particulier (comme une soupape) au niveau du mât d'injection.

On notera de plus que l'utilisation de différentes alimentations offre notamment la possibilité de régler plus facilement la pression dans la chambre interne 23 en injectant toujours le débit de combustible requis par le moteur.

Le mode "brûleur" (figure 11) est utilisé en cas de problème de combustion, typiquement à un faible nombre de Mach de vol supersonique, quand la tenue du matériau constituant le bord d'attaque 7 du mât 6 n'est pas mise en cause. Cela se traduit par une admission d'air (flèche A) au niveau du bord d'attaque perméable (notamment perforé) 8.

Une combustion dite pilote a alors lieu dans la chambre interne 23 du mât 6 par mélange avec le combustible qui y est injecté (flèches B). A la sortie du mât (extrémité aval par rapport à l'écoulement de l'air), on obtient alors, à côté d'une injection de combustible (flèches C), une injection principale de gaz brûlés, par exemple riches (flèche D).

L'effet principal de la combustion dans la chambre pilote 23 est l'allumage et la stabilisation de la combustion principale par création d'un jet chaud. La combustion dans la chambre pilote s'effectuant dans un écoulement subsonique et à une section constante, elle fait diminuer la pression, ce qui favorise la pénétration de l'air à travers le bord d'attaque.

La paroi de la chambre pilote est soumise à des flux thermiques, mais :
- la pression y reste faible, le mélange est riche et les flux thermiques engendrés restent raisonnables,
- le combustible refroidit cette chambre (qui de plus peut être constituée d'un matériau résistant à haute température si nécessaire) :
   1/ par circulation, en particulier dans le cas où on utilise une injection de combustible (flèches C),
   2/ par refroidissement pariétal (transpiration ou effusion) si on choisit une technologie de paroi perméable pour la chambre pilote, comme on le voit sur la figure 11.

La gestion de l'allumage s'effectue de la façon suivante.

Lorsque la température d'arrêt de l'air est suffisante pour engendrer une auto-inflammation (1000 K avec de l'hydrogène par exemple), il n'est pas nécessaire d'utiliser le dispositif d'allumage 31.

En revanche, lorsque les conditions de vol sont telles qu'une auto-inflammation du mélange n'est pas engendrée dans la chambre pilote, il faut utiliser le dispositif d'allumage. Si, pour une raison quelconque, on souhaite éviter un allumage dans ces conditions, la commande du dispositif d'allumage fournit un degré de liberté supplémentaire.

Par ailleurs, la combustion principale derrière le mât d'injection peut s'effectuer dans un écoulement subsonique ou supersonique. L'air capté par la prise d'air principale contourne le mât d'injection et brûle avec le combustible restant dans les gaz brûlés riches (flèche D) et avec celui injecté au niveau des flèches C, le cas échéant.

Eventuellement, au moins une des alimentations de combustible 27 peut permettre d'injecter de l'oxygène ou un autre comburant afin, par exemple, d'augmenter la poussée quand la mission le nécessite (fonctionnement dit en statoréacteur à éjecteurs).

Le mode "refroidissement du bord d'attaque" (figure 12) est utilisé quand la tenue du matériau constituant le bord d'attaque est mise en cause. Comme déjà indiqué, cela se traduit par une injection de fluide de refroidissement (notamment du combustible) à travers le bord d'attaque perméable 8 de l'étrave 7 du mât d'injection 6.

Dans ces conditions, la chambre interne ne contient que du combustible qui y transite avant d'être injecté en partie vers l'avant --dans le sens d'écoulement du comburant-- (pour refroidir le bord d'attaque 8 de l'étrave 7 par création d'un film protecteur autour de celui-ci), et en partie vers l'arrière en formant l'injection principale de combustible (flèche D') et éventuellement des injections auxiliaires (flèches C), pour une injection et une combustion dans le moteur.

Dans ce cas, aucune combustion n'a lieu dans la chambre interne : l'air, qui serait dans des conditions suffisantes pour un autoallumage, possède alors une pression inférieure à celle du combustible et ne peut donc pas pénétrer dans la chambre interne.

A titre d'illustration, on indiquera ci-après un exemple numérique, relatif à différentes pressions du système, pour un statoréacteur propulsant un aéronef volant de Mach 3 à Mach 15.

En désignant (voir la figure 9) par :
- Pa : la pression de l'air derrière la partie droite du choc détaché Δ au bord d'attaque 8 du mât,
- Pci : la pression dans la chambre interne,
- Pe : la pression d'injection du combustible ou plus généralement des ergols (c'est-à-dire celle injectée dans le mât et régulée, aux pertes de charge près), on notera que :
   - Pa dépend de la forme du mât et des conditions aérodynamiques incidentes,
   - Pe est réglée en fonction de l'effet à obtenir et de la réponse du système,
   - Pci est le résultat du fonctionnement choisi.

On rappelle que les paramètres de réglage principaux sont :
- la pression d'alimentation qui engendre Pe,
- l'utilisation ou non (OUI ; NON) du dispositif d'allumage.

Le tableau ci-dessous résume les ordres de grandeur des pressions obtenues dans les différents éléments du système :

| | * | Pa (bar) | Pe (bar) | Pci (bar) |
|---|---|---|---|---|
| Mach 3 | OUI | 2,6 | 2 | 8 |
| Mach 5 | NON | 6 | 4 | 10 |
| Mach 6 | NON | 7,5 | 25 | 30 |
| Mach 8 | NON | 9 | 25 | 30 |
| Mach 15 | NON | 10 | 40 | 45 |

| | | | | |
|---|---|---|---|---|
| *: utilisation du dispositif d'allumage | | | | |

Par ailleurs, il convient de veiller à ce que la pression d'injection à travers les injecteurs principaux et secondaires soit supérieure à la pression locale de l'air et, si possible, que les conditions d'injection soient favorables au mélange de ce fluide injecté avec l'air qui contourne le mât.

Souvent, la nécessité de refroidir la chambre de combustion, ainsi que les besoins en poussée, impliquent un fonctionnement avec un débit de combustible qui augmente fortement à partir de Mach 10, ce qui explique l'importante augmentation de Pe, dans le tableau ci-dessus, entre Mach 8 et Mach 15.

Comme indiqué précédemment, les avantages du mât d'injection de combustible selon l'invention sont nombreux. Toutefois, il est particulièrement adapté à un statoréacteur fonctionnant sur une large plage de Mach en supersonique et en hypersonique et utilisant, au moins en partie, un combustible qui peut présenter des difficultés d'allumage, comme le kérosène. Il est également très utile quand on souhaite utiliser une combustion supersonique pour des Mach de vol inférieurs à 6 ou lorsque, pour diverses raisons, une aide à l'allumage est nécessaire.

L'idée de base de l'invention est donc, outre le fait de refroidir le bord d'attaque du mât d'injection en injectant, à travers celui-ci, un fluide de refroidissement (par exemple le combustible) aux plus hautes vitesses (mode "refroidissement du bord d'attaque"), de faciliter l'allumage aux plus basses vitesses en admettant de l'air à l'intérieur du mât (mode "brûleur"), en exploitant ainsi totalement la perméabilité à double sens du bord d'attaque.

On notera de plus que cette fonction de soupape est obtenue sans organe mécanique au niveau du mât d'injection, simplement en gérant le différentiel de pression entre l'air incident et l'intérieur du mât.

## Revendications

1. Mât (6) d'injection de combustible pour un statoréacteur (1) destiné à fonctionner à un nombre de Mach élevé et comportant une chambre de combustion (8) dans laquelle est introduite une veine de comburant (F), ledit mât (6) comportant une étrave (7) ayant un bord d'attaque (8) recevant ladite veine de comburant et formant, au culot dudit mât, une rampe d'injecteurs élémentaires de combustible, disposée dans ladite veine de comburant transversalement à celle-ci et répartissant ledit combustible dans ladite veine de comburant,
**caractérisé en ce que** :
- ladite étrave (7) est formée, au moins au voisinage de son bord d'attaque (8), par une paroi (12) dans la concavité de laquelle est disposée une chambre (11) ;
- des moyens d'injection (15, 18) sont aptes à engendrer, dans ladite chambre (11), une pluralité de jets d'un fluide de refroidissement répartis le long de ladite étrave (7) et frappant la face concave de ladite paroi (12), au moins dans la région dudit bord d'attaque (8) ; et
- ladite paroi (12) est perméable aux jets de fluide de refroidissement qui la frappent sur sa face concave, de sorte que lesdits jets de fluide de refroidissement traversent ladite paroi (12).

2. Mât d'injection selon la revendication 1, **caractérisé en ce que** ladite paroi (12) de l'étrave (7) est réalisée, au moins au voisinage du bord d'attaque (8) de cette dernière, en un matériau perméable aux jets de fluide de refroidissement.

3. Mât d'injection selon la revendication 1, **caractérisé en ce que** ladite paroi (12) de l'étrave (7) présente au moins une série de perforations (13) s'étendant le long du bord d'attaque (8) de l'étrave (7).

4. Mât d'injection selon la revendication 1, **caractérisé en ce que** ladite paroi (12) de l'étrave (7) présente au moins une fente (13a) s'étendant le long du bord d'attaque (8) de l'étrave (7).

5. Mât d'injection selon l'une quelconque des revendications 1 à 4, **caractérisé en ce que** le fluide de refroidissement est constitué par du combustible.

6. Mât d'injection selon l'une quelconque des revendications 1 à 5, **caractérisé en ce que** ladite étrave (7) est constituée d'une pièce sensiblement en forme de dièdre dont l'arête forme le bord d'attaque (8) de l'étrave, et définissant, dans sa concavité, une chambre (11).

7. Mât d'injection selon la revendication 5 ou 6, **caractérisé en ce qu'**il comporte un corps (10) définissant, à l'intérieur du mât d'injection (6), une cavité interne (14) dans laquelle sont agencées une pluralité de chambres élémentaires (15) réalisées, chacune, sous forme d'un cylindre perforé ouvert aux deux extrémités.

8. Mât d'injection selon la revendication 7, **caractérisé en ce que** lesdites chambres élémentaires (15) sont disposées l'une au-dessus de l'autre, et à un certain écartement l'une de l'autre, dans ladite cavité (14) en une rangée.

9. Mât d'injection selon la revendication 8, **caractérisé en ce qu'**une première extrémité (15A) de chacune desdites chambres (15) débouche dans la concavité de ladite étrave (7), tandis que chaque autre extrémité (15B) desdites chambres (15), au culot du mât d'injection (6), est réalisée sous forme d'injecteur principal de combustible.

10. Mât d'injection selon la revendication 9, **caractérisé en ce qu'**une pièce en forme de capot (16), munie d'orifices correspondants (16A), recouvre l'ensemble des premières extrémités (15A) desdites chambres (15).

11. Mât d'injection selon l'une quelconque des revendications 7 à 10, **caractérisé en ce que**, au culot du mât (6), il est prévu, dans chaque intervalle entre deux chambres élémentaires (15), un injecteur secondaire de combustible (17).

12. Mât d'injection selon l'une quelconque des revendications 7 à 11, **caractérisé en ce que** l'alimentation en combustible dudit mât est assurée par des canaux d'alimentation (18) prévus dans les extrémités (6A, 6B) du mât (6) encastrées dans les parois opposées (5A, 5B) de la chambre d'injection (5) du statoréacteur.

13. Mât d'injection selon l'une quelconque des revendications 1 à 12, **caractérisé en ce qu'**il comprend des capteurs (32, 33, 34) de mesure de la pression au bord d'attaque, de celle à l'intérieur du mât et de la pression d'alimentation en combustible.

14. Mât d'injection selon l'une quelconque des revendications 1 à 13,
**caractérisé en ce qu'**il comporte un capteur (35) de mesure de la température de la paroi du bord d'attaque.

## Patentansprüche

1. Brennstoffeinspritzstrebe (6) für ein Staustrahltriebwerk (1), das mit hoher Machzahl funktionieren soll und eine Brennkammer (9) umfasst, in die ein Sauerstoffträgerstrahl (F) eingeleitet wird, wobei die genannte Strebe (6) einen Bug (7) mit einer Vorderkante (8) besitzt, auf die der genannte Sauerstoffträgerstrahl auftrifft und die am Sockel der genannten Strebe eine Rampe elementarer Brennstoffeinspritzdüsen bildet, die quer im genannten Sauerstoffträgerstrahl angeordnet ist und die den Brennstoff im genannten Sauerstoffträgerstrahl verteilt,
**dadurch gekennzeichnet, dass**
- der genannte Bug (7) zumindest in Nähe seiner Vorderkante (8) durch eine Wand (12) gebildet wird, in deren Höhlung eine Kammer (11) angeordnet ist;
- Einspritzmittel (15, 18) in der genannten Kammer (11) mehrere, entlang des genannten Bugs (7) verteilte und zumindest im Bereich der genannten Vorderkante (8) auf die konkave Fläche der genannten Wand (12) auftreffende Strahlen eines Kühlmediums erzeugen können; und
- die genannte Wand (12) gegenüber den Strahlen des Kühlmediums, die auf ihre konkave Fläche auftreffen, durchlässig ist, so dass die genannten Kühlmediumstrahlen durch die genannte Wand (12) hindurchgehen.

2. Einspritzstrebe gemäß Anspruch 1,
**dadurch gekennzeichnet, dass** die genannte Wand (12) des Bugs (7) zumindest in Nähe von dessen Vorderkante (8) aus einem gegenüber den Kühlmediumstrahlen durchlässigen Material ausgeführt ist.

3. Einspritzstrebe gemäß Anspruch 1,
**dadurch gekennzeichnet, dass** die genannte Wand (12) des Bugs (7) mindestens eine Reihe von Löchern (13) aufweist, die sich entlang der Vorderkante (8) des Bugs (7) erstrecken.

4. Einspritzstrebe gemäß Anspruch 1,
**dadurch gekennzeichnet, dass** die genannte Wand (12) des Bugs (7) mindestens einen Schlitz (13a) aufweist, der sich entlang der Vorderkante (8) des Bugs (7) erstreckt.

5. Einspritzstrebe gemäß einem der Ansprüche 1 bis 4,
**dadurch gekennzeichnet, dass** das Kühlmedium durch Brennstoff gebildet wird.

6. Einspritzstrebe gemäß einem der Ansprüche 1 bis 5,
**dadurch gekennzeichnet, dass** der genannte Bug (7) aus einem Teil besteht, das im wesentlichen die Form eines Dieders besitzt, dessen Kante die Vorderkante (8) des Bugs bildet, und das in seiner Höhlung eine Kammer (11) abgrenzt.

7. Einspritzstrebe gemäß Anspruch 5 oder 6,
**dadurch gekennzeichnet, dass** sie einen Körper (10) umfasst, der im Inneren der Einspritzstrebe (6) eine Innenhöhlung (14) abgrenzt, in der mehrere elementare Kammern (15) angeordnet sind, die jede in Form eines an beiden Enden offenen perforierten Zylinders ausgeführt sind.

8. Einspritzstrebe gemäß Anspruch 7,
**dadurch gekennzeichnet, dass** die genannten elementaren Kammern (15) in der genannten Höhlung (14) in einer Reihe übereinander und in einem bestimmten Abstand zueinander angeordnet sind.

9. Einspritzstrebe gemäß Anspruch 8,
**dadurch gekennzeichnet, dass** ein erstes Ende (15A) jeder der genannten Kammern (15) in die Höhlung des genannten Bugs (7) mündet, wohingegen jedes andere Ende (15B) der genannten Kammern (15) am Sockel der Einspritzstrebe (6) in Form einer Brennstoffhaupteinspritzdüse ausgeführt ist.

10. Einspritzstrebe gemäß Anspruch 9,
**dadurch gekennzeichnet, dass** alle ersten Enden (15A) der genannten Kammern (15) durch ein haubenförmiges Teil (16) mit entsprechenden Öffnungen (16A) abgedeckt werden.

11. Einspritzstrebe gemäß einem der Ansprüche 7 bis 10,
**dadurch gekennzeichnet, dass** am Sockel der Strebe (6) in jedem Zwischenraum zwischen zwei elementaren Kammern (15) eine Brennstoffnebeneinspritzdüse (17) vorgesehen ist.

12. Einspritzstrebe gemäß einem der Ansprüche 7 bis 11,
**dadurch gekennzeichnet, dass** die Brennstoffversorgung der genannten Strebe durch Zufuhrkanäle (18) gewährleistet wird, die in den Enden (6A, 6B) der Strebe (6) vorgesehen sind, die wiederum in den gegenüberliegenden Wänden (5A, 5B) der Einspritzkammer (5) des Staustrahltriebwerks verspannt sind.

13. Einspritzstrebe gemäß einem der Ansprüche 1 bis 12,
**dadurch gekennzeichnet, dass** sie Messfühler (32, 33, 34) zur Messung des Drucks an der Vorderkante, des Drucks im Inneren der Strebe und des Brennstoffzufuhrdrucks umfasst.

14. Einspritzstrebe gemäß einem der Ansprüche 1 bis 13,
**dadurch gekennzeichnet, dass** sie einen Messfühler (35) zur Messung der Temperatur der Wand der Vorderkante umfasst.

## Claims

1. A fuel injection strut (6) for a ramjet (1) adapted to operate at a high Mach number and including a combustion chamber (8) into which is introduced a flow (F) of combustion-supporting gas, said strut (6) including a stem (7) having a leading edge (8) receiving said flow of combustion-supporting gas and forming, at the stern of said strut, a manifold of individual fuel injectors, disposed in said flow of combustion-supporting gas transversely to the latter and distributing said fuel into said flow of combustion-supporting gas,
**characterized in that**:
- said stem (7) is formed, at least in the vicinity of its leading edge (8), by a wall (12) in the concave side of which is disposed a chamber (11);
- injection means (15, 18) are adapted to generate, in said chamber (11), a plurality of jets of a cooling fluid distributed along said stem (7) and impinging on the concave face of said wall (12), at least in the region of said leading edge (8); and
- said wall (12) is permeable to the jets of cooling fluid which impinge on it on its concave face so that said jets of cooling fluid pass through said wall (12).

2. An injection strut according to claim 1,
**characterized in that** said wall (12) of the stem (7) is made, at least in the vicinity of the leading edge (8) of the latter, from a material permeable to the jets of cooling fluid.

3. An injection strut according to claim 1,
**characterized in that** said wall (12) of the stem (7) has at least one series of perforations (13) extending along the leading edge (8) of the stem (7).

4. An injection strut according to claim 1,
**characterized in that** said wall (12) of the stem (7) has at least one slot (13a) extending along the leading edge (8) of the stem (7).

5. An injection strut according to any one of claims 1 to 4,
**characterized in that** the cooling fluid consists of fuel.

6. An injection strut according to any one of claims 1 to 5,
**characterized in that** said stem (7) is a substantially dihedral shape part the edge of which forms the leading edge (8) of the stem and defining, on its concave side, a chamber (11).

7. An injection strut according to claim 5 or claim 6,
**characterized in that** it includes a body (10) defining, inside the injection strut (6), an internal cavity (14) in which there are disposed a plurality of elementary chambers (15) each in the form of a perforated cylinder open at both ends.

8. An injection strut according to claim 7,
**characterized in that** said individual chambers (15) are disposed one on top of the other and with a particular spacing from each other in said cavity (14) in a row.

9. An injection strut according to claim 8,
**characterized in that** a first end (15A) of each of said chambers (15) opens into the concave side of said stem (7) and each other end (15B) of said chambers (15) at the stern of the injection strut (6) is in the form of a main fuel injector.

10. An injection strut according to claim 9,
**characterized in that** a cover (16) in the form of a cap provided with corresponding orifices (16A) covers all of the first ends (15A) of said chambers (15).

11. An injection strut according to any one of claims 7 to 10,
**characterized in that** a secondary fuel injector (17) is provided at the stern of the strut (6) in each gap between two individual chambers (15).

12. An injection strut according to any one of claims 7 to 11,
**characterized in that** said strut is supplied with fuel via supply passages (18) in the ends (6A, 6B) of the strut (6) built into the opposite walls (5A, 5B) of the injection chamber (5) of the ramjet.

13. An injection strut according to any one of claims 1 to 12,
**characterized in that** it comprises sensors (32, 33, 34) for measuring the pressure at the leading edge, that inside the strut and the fuel supply pressure.

14. An injection strut according to any one of claims 1 to 13,
**characterized in that** it includes a sensor (35) for measuring the temperature of the wall of the leading edge.
